(19) Europäisches Patentamt
European Patent Office
Office européen des brevets

(11) **EP 4 331 861 B1**

(12) **EUROPÄISCHE PATENTSCHRIFT**

(45) Veröffentlichungstag und Bekanntmachung des Hinweises auf die Patenterteilung:
**17.12.2025   Patentblatt 2025/51**

(21) Anmeldenummer: **23185492.8**

(22) Anmeldetag: **14.07.2023**

(51) Internationale Patentklassifikation (IPC):
**B60B 27/00** *(2006.01)*     **B60B 35/12** *(2006.01)*
**B60B 35/14** *(2006.01)*

(52) Gemeinsame Patentklassifikation (CPC):
**B60B 27/0026; B60B 27/0078; B60B 35/121;**
B60B 27/0005; B60B 27/0094; B60B 35/14;
B60B 2900/212; B60B 2900/313; B60B 2900/321

(54) **RADLAGEREINHEIT FÜR EIN KRAFTFAHRZEUG SOWIE KRAFTFAHRZEUG**

WHEEL BEARING UNIT FOR A MOTOR VEHICLE, AND MOTOR VEHICLE

UNITÉ DE PALIER DE ROUE POUR UN VÉHICULE AUTOMOBILE ET VÉHICULE AUTOMOBILE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **25.08.2022   DE 102022121486**

(43) Veröffentlichungstag der Anmeldung:
**06.03.2024   Patentblatt 2024/10**

(73) Patentinhaber: **AUDI AG**
**85057 Ingolstadt (DE)**

(72) Erfinder:
• **Albl, Johannes**
**85055 Ingolstadt (DE)**
• **Frisch, Michael**
**94513 Schönberg (DE)**

(56) Entgegenhaltungen:
DE-A1- 102017 220 457     DE-A1- 102020 126 843
JP-A- 2009 234 542     US-A1- 2021 138 834
US-B1- 6 286 909

**Beschreibung**

Die Erfindung betrifft eine Radlagereinheit für ein Kraftfahrzeug gemäß der im Oberbegriff des Patentanspruches 1 angegebenen Art sowie ein Kraftfahrzeug gemäß der im Oberbegriff des Patentanspruches 9 angegebenen Art.

Die gattungsbildende DE 10 2004 054 907 A1 offenbart eine Radlagereinheit, gemäß der eine eine Innenverzahnung aufweisende Radnabe über ein Wälzlager drehbar in Bezug zu einem Radlagergehäuse gelagert ist. Eine Reihe der Wälzkörper des Wälzlagers ist dabei in einem Lagerinnenring geführt, welcher als ein von der Radnabe separates Bauteil ausgebildet und mit dieser fest verbunden ist. Ein bekanntes Problem dabei ist, dass im Bereich des Lagerinnenrings hohe Kerbspannungen im Zahngrund der Innenverzahnung auftreten, die zu Verzahnungsrissen in der Innenverzahnung der Radnabe und damit zu einer frühzeitigen Zerstörung der Radnabe und letztendlich zum Ausfall der Radlagereinheit führen können.

Die US 6,286,909 B1 beschreibt eine Radlagereinheit, bei der die Innenverzahnung der Radnabe eine Außeneingriffsnut und die mit der Radnabe kämmende Keilwelle in ihrer Außenverzahnung eine korrespondierend hierzu angeordnete Inneneingriffsnut aufweist. Im Zwischenraum zwischen Außeneingrffs- und Inneneingriffsnut ist ein Anschlagring angeordnet, mit dem Effekt, dass ein Entfernen der Keilwelle verhindert wird.

Eine die Merkmale des Oberbegriffes des Patentanspruches 1 aufweisende Radlagereinheit ist der Offenbarung der JP 2009 234542 A zu entnehmen.

Der Erfindung liegt die Aufgabe zugrunde eine Radlagereinheit gemäß der im Oberbegriff des Patentanspruches 1 angegebenen Art derart weiterzubilden, dass ein Auftreten von Verzahnungsrissen vermieden wird und damit eine erhöhte Lebensdauer der Radlagereinheit sichergestellt ist.

Diese Aufgabe wird durch die kennzeichnenden Merkmale des Patentanspruches 1 in Verbindung mit seinen Oberbegriffsmerkmalen gelöst.

Die Unteransprüche 2 bis 8 bilden vorteilhafte Weiterbildungen der erfindungsgemäßen Radlagereinheit.

In bekannter Art und Weise umfasst die Radlagereinheit ein Radlagergehäuse, ein Wälzlager und eine Radnabe, welche eine Durchgangsöffnung mit einer Innenverzahnung aufweist, über die die Radnabe mit einem eine Außenverzahnung aufweisenden Antriebszapfen einer Gelenkswelle drehfest verbindbar ist. Das Wälzlager, über das die Radnabe drehbar in Bezug zum Radlagergehäuse gelagert ist, umfasst in bekannter Art und Weise zumindest eine Reihe von Wälzkörpern, die radnabenseitig in einem in Bezug zur Radnabe als ein separates Bauteil ausgebildeten, mit der Radnabe fest verbundenen Lagerinnenring geführt sind.

Zudem ist vorgesehen, dass die Innenverzahnung einen zahnfreien Abschnitt aufweist, der die Innenverzahnung in einen ersten Verzahnungsbereich und einen in axialer Richtung a davon beabstandet zweiten Verzahnungsbereich teilt und der derart positioniert ist, dass der zahnfreie Abschnitt radial gegenüberliegend zur lagerinnenseitigen Stirnseite des Lagerinnenrings liegt.

Der vorgesehene zahnfreie Abschnitt und dessen Positionierung radial gegenüberliegend zur lagerinnenseitigen Stirnseite des Lagerinnenrings des Wälzlagers hat den Effekt, dass lokale Kerbspannungen im Zahngrund der Innenverzahnung minimiert werden. D.h., es ist nunmehr in vorteilhafter Weise sichergestellt, dass - da die zu Verzahnungsrissen führenden Kerbspannungen reduziert sind - eine erhöhten Lebensdauer der Radnabe und damit der Radlagereinheit sichergestellt ist.

Erfindungsgemäß ist nunmehr vorgesehen, dass - in axialer Richtung a betrachtet - der zahnfreie Abschnitt eine axiale Abschnittslänge $L_{Ab}$ aufweist, für die gilt

$$0,1 \leq \frac{L_{Ab}}{L_{In}} \leq 0,3$$

wobei mit $L_{In}$ die axiale Länge der Innenverzahnung bezeichnet ist.

Die Dimensionierung gemäß obiger Vorschrift erweist sich als besonders vorteilhaft, da einerseits eine für die vorgesehene Reduzierung der Kerbspannung ausreichende Länge des zahnfreien Abschnitts sichergestellt ist und andererseits durch die Begrenzung nach oben auch gewährleistet ist, dass die Verzahnungsabschnitte eine ausreichende Verzahnungslänge zur Drehmomentübertragung aufweisen.

Zur Gewährleistung einer einfachen, kostengünstigen Herstellung ist der zahnfreie Abschnitt bevorzugt in Form eines - vor dem Verzahnungsräumen in die Durchgangsöffnung der Radnabe eingebrachten - freigedrehten Bereichs bzw. eines Freistiches ausgebildet.

Wie erste Versuche gezeigt haben, ist dabei der Durchmesser $D_{Ab}$ des zahnfreien Abschnitts bevorzugt so zu wählen, dass für diesen gilt:

$$1 \leq \frac{D_{Ab}}{D_F} \leq 1,2$$

wobei mit $D_F$ der Fußkreisdurchmesser der Innenverzahnung bzw. der Verzahnungsabschnitte der Innenverzahnung bezeichnet ist.

Eine weitere bevorzugte Ausführungsform zeichnet sich dadurch aus, dass die Durchgangsöffnung der Radnabe neben dem durch die Innenverzahnung, also den ersten und ersten Verzahnungsabschnitt sowie den zwischen den beiden Verzahnungsabschnitten angeordneten zahnfreien Abschnitt, ausgebildeten Tragbereich, noch einen eine Anlageschulter aufweisenden Befestigungsbereich sowie einen - in axialer Richtung a betrachtet - zwischen dem Tragbereich und dem Befestigungsbereich angeordneten Zwischenbereich umfasst, und dass bezogen auf den Fußkreisdurchmesser $D_F$, der Zwischenbereich einen Zwischenbereichdurchmesser Dz aufweist, für den gilt:

$$\frac{D_Z}{D_F} > 1$$

Neben der durch den vergrößerten Durchmesser erzielten Gewichtsersparnis, ist hierdurch insbesondere auch sichergestellt, dass beim Verzahnungsräumen das entsprechende Räumwerkzeug lediglich im Bereich des Tragbereichs zum Eingriff kommt, sodass auch die Belastung des Räumwerkzeugs deutlich reduziert ist.

Vorzugsweise ist dabei vorgesehen, dass der Zwischenbereichdurchmesser Dz größer als der Durchmesser $D_{Ab}$ des zahnfreien Abschnitts der Innenverzahnung ist oder gleich groß wie der Durchmesser $D_{Ab}$ ist.

Bevorzugt weist der Befestigungsbereich einen Befestigungsbereichsdurchmesser $D_B$ auf, für den bezogen auf den Fußkreisdurchmesser $D_F$ gilt:

$$\frac{D_B}{D_F} > 1,2$$

Hierdurch ist sichergestellt, dass eine ausreichend große Anlageschulter zur Verfügung gestellt ist.

Um in axialer Richtung a eine möglichst kompakte Bauform der Radlagereinheit sicherzustellen, ist gemäß einer weiteren bevorzugten Ausführungsform vorgesehen, dass - axialer Richtung a betrachtet - der Zwischenbereich eine Zwischenbereichslänge Lz aufweist, für die bezogen auf die Länge $L_{In}$ der Innenverzahnung gilt:

$$0,5 \leq \frac{L_Z}{L_{In}} \leq 0,7$$

Eine weitere, vorteilhafte Ausführungsform der Radlagereinheit zeichnet sich dadurch aus, dass - axialer Richtung a betrachtet - der Befestigungsbereich eine Befestigungsbereichslänge $L_B$ aufweist, für die bezogen auf die Länge $L_{In}$ der Innenverzahnung gilt:

$$0,3 \leq \frac{L_B}{L_{In}} \leq 0,6$$

Neben einer in axialer Richtung a betrachteten kompakten Bauform, ist hierdurch insbesondere auch sichergestellt, dass ausreichender Bauraum für Befestigungsmittel vorhanden ist.

Der Erfindung liegt des Weiteren die Aufgabe zugrunde, ein Kraftfahrzeug, welches eine Radlagereinheit umfasst, derart weiterzubilden, dass ein verschleißarmer Betrieb sichergestellt ist.

Diese Aufgabe wird dadurch gelöst, dass die Radlagereinheit nach einem der Patentansprüche 1 bis 8 ausgebildet ist.

Sämtliche Ausführungen zu der erfindungsgemäßen Radlagereinheit lassen sich analog auf das erfindungsgemäße Kraftfahrzeug übertragen, sodass mit diesem auch die zuvor genannten Vorteile erzielt werden.

Weitere Vorteile und Anwendungsmöglichkeiten der Erfindung ergeben sich aus der nachfolgenden Beschreibung in Verbindung mit dem in der Zeichnung dargestellten Ausführungsbeispiel.

In der Zeichnung bedeutet:

Fig. 1    eine Seitenansicht einer Radlagereinheit eines Kraftfahrzeugs nach dem Stand der Technik;

Fig. 2    eine erfindungsgemäße Radlagereinheit in einer Seitenansicht, und

Fig. 3    ein vergrößert Ausschnitt aus Fig. 2

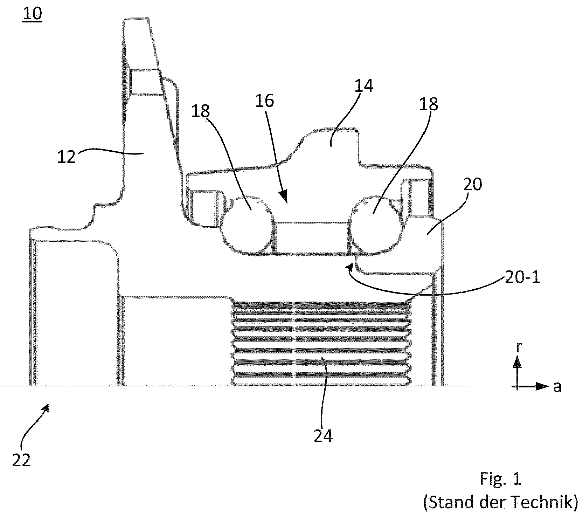

Fig. 1 zeigt eine insgesamt mit der Bezugsziffer 10 bezeichnete Radlagereinheit für ein Kraftfahrzeug. Die Radlagereinheit 10 umfasst eine Radnabe 12, ein Radlagergehäuse 14 sowie ein Wälzlager 16, über das die Radnabe 12 drehbar in Bezug zum Radlagergehäuse 14 gelagert ist.

Wie Fig. 1 weiter zu entnehmen ist, weist das Wälzlager 16 zwei Reihen von Wälzkörpern 18 auf. Während die - in Fig. 1 - linke Reihe von Wälzkörpern 18 in einer in der Radnabe 12 ausgebildeten Lauffläche abrollen, ist die rechte Reihe von Wälzkörpern 18 in einem, eine entsprechende Lauffläche aufweisenden, mit der Radnabe 12 fest verbundenen Lagerinnenring 20 geführt.

Die Radnabe 12 weist ferner eine Durchgangsöffnung 22 auf, die bereichsweise mit einer Innenverzahnung 24 versehen ist. Über die Innenverzahnung 24 ist die Radnabe 12 in bekannter Art und Weise mit einem - hier aus Gründen der Übersichtlichkeit nicht dargestellten - eine korrespondierend zur Innenverzahnung 24 ausgebildete Außenverzahnung aufweisenden Antriebszapfen einer Gelenksquelle drehfest verbindbar. Mit dem Bezugszeichen Dz ist nachfolgend der Fußkreisdurchmesser der Innenverzahnung 24 bezeichnet.

Nachteilig an dem Stand der Technik ist, dass als Folge der durch den Lagerinnenring 20 bedingten lokalen Materialverjüngung der Radnabe 12, insbesondere im Bereich des Übergangs zur lagerinnenseitigen Stirnseite 20-1 des Lagerinnenrings 20, hohe Kerbspannungen im Zahngrund der Innenverzahnung 24 auftreten, welche wiederum zu Verzahnungsrissen in der Innenverzahnung 24 führen und damit eine frühzeitiges Versagen der Radnabe 12 bzw. der Radlagereinheit 10 bewirken können.

Hier setzt nun die Erfindung ein:

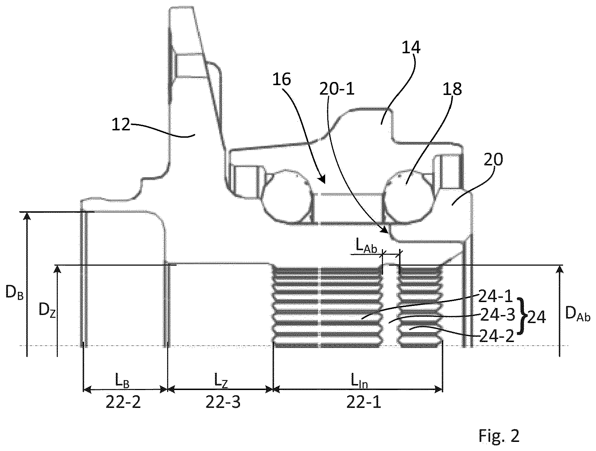

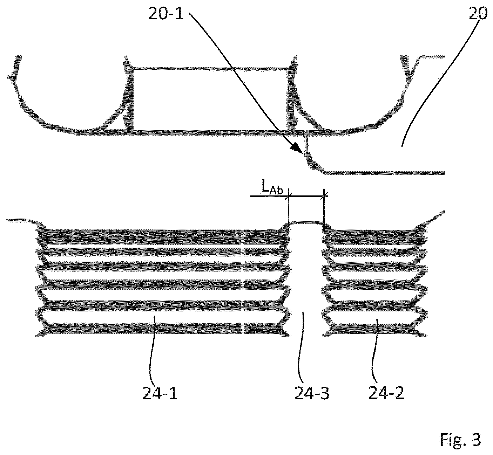

Wie Fig. 2 und Fig. 3 zeigen, ist nunmehr vorgesehen, dass die Innenverzahnung 24 einen ersten Verzahnungsabschnitt 24-1, einen zweiten Verzahnungsabschnitte 24-2 und einen in axialer Richtung a betrachtet zwischen den beiden Verzahnungsabschnitten 24-1, 24-2 liegenden, die beiden Verzahnungsabschnitte 24-1, 24-2 voneinander trennenden zahnfreien Abschnitt 24-3 aufweisend ausgebildet ist.

Dabei sind - wie Fig. 2 und insbesondere Fig. 3 weiter zu entnehmen ist - die die Innenverzahnung 24 bildenden Abschnitte 24-1, 24-2, 24-3 derart angeordnet und dimensioniert, dass in axialer Richtung a betrachtet, der zahnfreie Abschnitt 24-3 radial gegenüberliegend zur lagerinnenseitigen Stirnseite 20-1 des Lagerinnenrings 20 positioniert ist.

Da nunmehr im kritischen Abschnitt der Radnabe 12, also im Bereich des Übergangs zur lagerinnenseitigen Stirnseite 20-1 des Lagerinnenrings 20, die Innenverzahnung 24 zahnlos ausgebildet ist, ist in vorteilhafter Weise sichergestellt, dass die zu Verzahnungsrissen führenden lokalen Kerbspannungen reduziert sind, was sich positiv auf die Lebensdauer der Radnabe 12 und damit der Radlagereinheit 10 auswirkt.

Der zahnfreien Abschnitt 24-3 ist vorliegend in Form eines in die Durchgangsöffnung 22 eingebrachten Freistichs bzw. freigedrehten Bereichs ausgebildet, und weist einen Durchmesser $D_{Ab}$, der vorliegend um 10% größer als der Fußkreisdurchmesser $D_F$ der Innenverzahnung 24 ist.

In axialer Richtung a betrachtet ist der zahnfreie Abschnitt 24-3 vorliegend so dimensioniert, dass dieser eine axiale Länge $L_{Ab}$ aufweist, die 10% bis 30% der Gesamtlänge $L_{In}$ der Innenverzahnung 24 entspricht, siehe Fig. 2 und Fig. 3.

Wie Fig. 2 weiter zu entnehmen ist, weist die Durchgangsöffnung 22 der Radnabe 12 neben den die Innenverzahnung 24 bildenden Bereich, nachfolgend auch als Tragbereich 22-1 bezeichnet, einen als Befestigungsbereich 22-2 bezeichneten, sowie einen - in axialer Richtung a betrachtet - zwischen dem Tragbereich 22-1 und dem Befestigungsbereich 22-2 angeordneten Zwischenbereich 22-3 auf.

Mit dem Bezugszeichen $L_B$ ist die axiale Länge des Befestigungsbereichs 22-2 und mit dem Bezugszeichen Lz die axiale Länge des Zwischenbereichs 22-3 bezeichnet. Entsprechend ist der Durchmesser des Befestigungsbereichs 22-2 mit $D_B$ und der Durchmesser des Zwischenbereichs 22-3 mit Dz bezeichnet, vgl. Fig. 2.

Um bei der Herstellung der Innenverzahnung 24 der Verschleiß des Räumwerkzeugs zu minimieren, ist der Durchmesser des Zwischenbereichs Dz größer als der Fußkreisdurchmesser $D_F$ der Innenverzahnung 24. Neben dem geringeren Verschleiß wird durch die Durchmesservergrößerung noch in vorteilhafter Weise eine Gewichtsersparnis erzielt. Vorliegend ist dabei der Durchmesser Dz so gewählt, dass dieser dem Durchmesser $D_{Ab}$ des zahnfreien Abschnitts 24-3 entspricht, d.h.

$$D_Z = D_{Ab} = 1{,}1 * D_F$$

Somit können in vorteilhafter Weise die Bereiche 24-3 und 24-2 in einem Arbeitsschritt hergestellt werden.

Der Befestigungsbereich 22-2 ist vorliegend so dimensioniert, dass der Befestigungsdurchmesser $D_B$ um den Faktor 1,2 größer als der Fußkreisdurchmesser $D_F$ ist. Hierdurch ist sichergestellt, dass für das Befestigungsmittel, wie z.B. Mutter oder Schraube, über das die Radnabe 12 mit dem Antriebszapfen einer Gelenksquelle verbunden wird, eine ausreichend große Befestigungsschulter 26 zur Verfügung steht, siehe Fig. 2.

Zur Gewährleistung einer kompakten Bauform der Radlagereinheit 10 sind die axialen Länge $L_B$ und Lz der Bereiche 22-2 und 22-3 vorliegend so dimensioniert, dass die axiale Länge $L_B$ des Befestigungsbereichs 22-2 ca. 30% bis 60% der Gesamtlänge $L_{In}$ der Innenverzahnung 24 und die axiale Länge Lz des Zwischenbereichs 22-3 ca. 50% bis 70% der Gesamtlänge $L_{In}$ der Innenverzahnung 24 entspricht.

**Patentansprüche**

1. Radlagereinheit (10) für ein Kraftfahrzeug, umfassend eine Radnabe (12), ein Radlagergehäuse (14) sowie ein Wälzlager (16), über das die Radnabe (12) drehbar in Bezug zum Radlagergehäuse (14) gelagert ist, wobei das Wälzlager (16) zumindest eine Reihe von Wälzkörpern (18) aufweist, die radnabenseitig in einem in Bezug zur Radnabe (12) als ein separates Bauteil ausgebildeten, mit der Radnabe (12) fest verbundenen Lagerinnenring (20) geführt sind, wobei die Radnabe (12) eine Durchgangsöffnung (22) mit einer Innenverzahnung (24) aufweist, über die die Radnabe (12) mit einem eine Außenverzahnung aufweisenden Antriebszapfens drehfest verbindbar ist, wobei die Innenverzahnung (24) einen ersten Verzahnungsabschnitt (24-1), einen zweiten Verzahnungsabschnitt (24-2) und einen in axialer Richtung (a) betrachtet zwischen den beiden Verzahnungsabschnitten (24-1, 24-2) liegenden, die beiden Verzahnungsabschnitte (24-1, 24-2) voneinander trennenden zahnfreien Abschnitt (24-3) aufweisend ausgebildet ist, wobei der zahnfreie Abschnitt (24-3) der Innenverzahnung (24) in axialer Richtung (a) betrachtet derart angeordnet ist, dass der zahnfreie Abschnitt (24-3) radial gegenüberliegend zur lagerinnenseitigen Stirnseite (20-1) des Lagerinnenrings (20) positioniert ist, **dadurch gekennzeichnet, dass** in axialer Richtung (a) betrachtet die Innenverzahnung (24) eine Länge ($L_{In}$) aufweist, und dass bezogen auf die Länge ($L_{In}$) der Innenverzahnung (24), der zahnfreie Abschnitt (22-3) eine axiale Abschnittslänge ($L_{Ab}$) aufweist, für die gilt:

$$0{,}1 \le \frac{Abschnittslänge\ (L_{Ab})}{Länge\ Innenverzahnung\ (L_{In})} \le 0{,}3$$

2. Radlagereinheit (10) nach Anspruch 1 oder 2, **dadurch gekennzeichnet, dass** bezogen auf einen Fußkreisdurchmesser ($D_F$) der Verzahnungsabschnitte (24-1, 24-2) der Innenverzahnung (24), der zahnfreie Abschnitt (24-3) der Innenverzahnung (24) einen Durchmesser ($D_{Ab}$) aufweist, für den gilt:

$$1 \le \frac{Durchmesser\ (D_{Ab})\ des\ zahnfreien\ Abschnitts}{Fußkreisdurchmesser\ (D_F)} \le 1{,}2$$

3. Radlagereinheit (10) nach Anspruch 1 oder 2,
   **dadurch gekennzeichnet, dass**
   die Durchgangsöffnung (22) der Radnabe (12) einen die Innenverzahnung (24) aufweisenden Tragbereich (22-1), einen eine Anlageschulter (26) aufweisenden Befestigungsbereich (22-2), sowie einen - in axialer Richtung (a) betrachtet - zwischen Trag- und Befestigungsbereich (22-1, 22-2) angeordneten Zwischenbereich (22-3) umfasst, und dass bezogen auf den Fußkreisdurchmesser ($D_F$), der Zwischenbereich (22-3) einen Zwischenbereichdurchmesser (Dz) aufweist, für den gilt:

$$\frac{Zwischenbereichdurchmesser\ (D_Z)}{Fußkreisdurchmesser\ (D_F)} > 1$$

4. Radlagereinheit (10) nach Anspruch 2 und 3,
   **dadurch gekennzeichnet, dass**
   der Zwischenbereichdurchmesser (Dz) größer als oder gleich groß wie der Durchmesser ($D_{Ab}$) des zahnfreien Abschnitts (24-3) der Innenverzahnung (24) ist.

5. Radlagereinheit (10) nach Anspruch 2 und 3,
   **dadurch gekennzeichnet, dass**
   dass bezogen auf den Fußkreisdurchmesser ($D_F$), der Befestigungsbereich (22-2) einen Befestigungsbereichdurchmesser ($D_B$) aufweist, für den gilt:

$$\frac{Befestigungsbereichdurchmesser\ (D_B)}{Fußkreisdurchmesser\ (D_F)} \geq 1,2$$

**6.** Radlagereinheit (10) nach Anspruch 3,
**dadurch gekennzeichnet, dass**
in axialer Richtung (a) betrachtet die Innenverzahnung (24) eine Länge ($L_{In}$) aufweist, und dass bezogen auf die Länge ($L_{In}$) der Innenverzahnung (24), der Zwischenbereich (22-3) eine axiale Zwischenbereichslänge (Lz) aufweist, für die gilt:

$$0,5 \leq \frac{Zwischenbereichslänge\ (L_Z)}{Länge\ Innenverzahnung\ (L_{In})} \leq 0,7$$

**7.** Radlagereinheit (10) nach Anspruch 3,
**dadurch gekennzeichnet, dass**
in axialer Richtung (a) betrachtet die Innenverzahnung (24) eine Länge ($L_{In}$) aufweist, und dass bezogen auf die Länge ($L_{In}$) der Innenverzahnung (24), der Befestigungsbereich (22-2) eine axiale Befestigungsbereichslänge ($L_B$) aufweist, für die gilt:

$$0,3 \leq \frac{Befestigungsbereichslänge\ (L_B)}{Länge\ Innenverzahnung\ (L_{In})} \leq 0,6$$

**8.** Radlagereinheit (10) nach Anspruch 2
**dadurch gekennzeichnet, dass**
der zahnlose Abschnitts (24-3) der Innenverzahnung (24) in Form eines Freistichs ausgebildet ist.

**9.** Kraftfahrzeug, umfassend eine Radlagereinheit,
**dadurch gekennzeichnet, dass**
die Radlagereinheit nach einem der Ansprüche 1 bis 8 ausgebildet ist.

**Claims**

**1.** Wheel bearing unit (10) for a motor vehicle, comprising a wheel hub (12), a wheel bearing housing (14), and a rolling bearing (16) via which the wheel hub (12) is rotatably mounted in relation to the wheel bearing housing (14), wherein the rolling bearing (16) has at least one row of rolling elements (18) which are guided on the wheel hub side in a bearing inner ring (20) which is formed as a separate component with respect to the wheel hub (12) and is securely connected to the wheel hub (12), wherein the wheel hub (12) has a through-opening (22) with an inner toothing (24) via which the wheel hub (12) can be connected rotationally fixed to a drive pin that has an outer toothing, wherein the inner toothing (24) is configured to have a first toothing section (24-1), a second tooth section (24-2) and a tooth-free section (24-3) which, as viewed in axial direction (a), is located between the two toothing sections (24-1, 24-2) and separates the two toothing sections (24-1, 24-2) from one another, wherein the tooth-free section (24-3) of the inner toothing (24) is arranged, as viewed in axial direction (a), such that the tooth-free section (24-3) is positioned radially opposite the end face (20-1) of the bearing inner ring (20) on the inside of the bearing,
**characterized in that**
as viewed in axial direction (a), the inner toothing (24) has a length (Lin), and **in that** with regard to the length ($L_{In}$) of the inner toothing (24), the tooth-free section (22-3) has an axial section length ($L_{Ab}$) for which the following applies:

$$0.1 \leq \frac{section\ length(L_{Ab})}{length\ of\ inner\ toothing(L_{In})} \leq 0.3$$

**2.** Wheel bearing unit (10) according to claim 1 or 2,

**characterized in that**

with regard to a root diameter ($D_F$) of the toothing sections (24-1, 24-2) of the inner toothing (24), the tooth-free section (24-3) of the inner toothing (24) has a diameter ($D_{Ab}$) for which the following applies:

$$1 \leq \frac{diameter\,(D_{Ab})\,of\,the\,tooth-free\,section}{root\,diameter\,(D_F)} \leq 1.2$$

3. Wheel bearing unit (10) according to claim 1 or 2,
   **characterized in that**
   the through-opening (22) of the wheel hub (12) comprises a support region (22-1) having the inner toothing (24), a fastening region (22-2) having a bearing shoulder (26), and an intermediate region (22-3) arranged between the support region and the fastening region (22-1, 22-2) - as viewed in axial direction (a) - and with regard to the root diameter ($D_F$) the intermediate region (22-3) has an intermediate region diameter ($D_Z$) for which the following applies:

$$\frac{intermediate\,region\,diameter\,(D_Z)}{root\,diameter\,(D_F)} > 1$$

4. Wheel bearing unit (10) according to claim 2 and 3,
   **characterized in that**
   the intermediate region diameter ($D_Z$) is greater than or equal to the diameter ($D_{Ab}$) of the tooth-free section (24-3) of the inner toothing (24).

5. Wheel bearing unit (10) according to claim 2 and 3,
   **characterized in that**
   with regard to the root diameter ($D_F$) the fastening region (22-2) has a fastening region diameter ($D_B$) for which the following applies:

$$\frac{fastening\,region\,diameter\,(D_B)}{root\,diameter\,(D_F)} \geq 1.2$$

6. Wheel bearing unit (10) according to claim 3,
   **characterized in that**,
   as viewed in axial direction (a), the inner toothing (24) has a length ($L_{In}$), and with regard to the length ($L_{In}$) of the inner toothing (24), the intermediate region (22-3) has an axial intermediate region length ($L_Z$) for which the following applies:

$$0.5 \leq \frac{intermediate\,region\,length\,(L_Z)}{length\,of\,inner\,toothing\,(L_{In})} \leq 0.7$$

7. Wheel bearing unit (10) according to claim 3,
   **characterized in that**,
   as viewed in axial direction (a), the inner toothing (24) has a length ($L_{In}$), and with regard to the length ($L_{In}$) of the inner toothing (24), the fastening region (22-2) has an axial fastening region length ($L_B$) for which the following applies:

$$0.3 \leq \frac{fastening\,region\,length\,(L_B)}{length\,of\,inner\,toothing\,(L_{In})} \geq 0.6$$

8. Wheel bearing unit (10) according to claim 2,
   **characterized in that**
   the tooth-free section (24-3) of the inner toothing (24) is configured in the form of an undercut.

9. Motor vehicle comprising a wheel bearing unit,
   **characterized in that**

the wheel bearing unit is configured according to any one of claims 1 to 8.

**Revendications**

1.  Unité de roulement de roue (10) pour un véhicule automobile, comprenant un moyeu de roue (12), un carter de roulement de roue (14) ainsi qu'un palier à roulement (16) sur lequel est monté le moyeu de roue (12) de manière rotative par rapport au carter de roulement de roue (14), dans laquelle le palier à roulement (16) présente au moins une série d'éléments de roulement (18) qui sont guidés côté moyeu de roue dans une bague interne de roulement (20) reliée de manière fixe au moyeu de roue (12) et réalisée en tant qu'élément séparé par rapport au moyeu de roue (12) sur laquelle le moyeu de roue (12) peut être relié de manière fixe en rotation à un tourillon d'entraînement présentant un engrenage externe, dans laquelle l'engrenage interne (24) est réalisé comme présentant une première section d'engrenage (24-1), une seconde section d'engrenage (24-2) et vue dans la direction axiale (a) une section (24-3) exempte de dents se trouvant entre les deux sections d'engrenage (24-1, 24-2) et séparant les deux sections d'engrenage (24-1, 24-2) l'une de l'autre, dans laquelle la section exempte de dents (24-3) de l'engrenage interne (24) est disposée vue dans la direction axiale (a) en ce que la section exempte de dents (24-3) est positionnée opposée radialement au côté avant (20-1) côté interne de palier de la bague interne de palier (20),
    **caractérisée en ce que**
    vu dans la direction axiale (a) l'engrenage interne (24) présente une longueur (Lin) et **en ce que** par rapport à la longueur ($L_{In}$) de l'engrenage interne (24), la section exempte de dents (22-3) présente une longueur de section axiale ($L_{Ab}$) pour laquelle s'applique :

    $$0,1 \leq \frac{longueur\ de\ section(L_{\grave{a}\ partir\ de})}{la\ longueur\ d'engrenage\ interne(L_{In})} \leq 0,3$$

2.  unité de roulement de roue (10) selon la revendication 1 ou 2,
    **caractérisée en ce que**
    par rapport à un diamètre de base ($D_F$) des sections d'engrenage (24-1, 24-2) de l'engrenage interne (24), la section exempte de dents (24-3) de l'engrenage interne (24) présente un diamètre ($D_{Ab}$) pour lequel s'applique :

    $$1 \leq \frac{diam\grave{e}tre(D_{\grave{a}\ partir\ du})de\ la\ section\ exempte\ de\ dents}{diam\grave{e}tre\ de\ base(D_F)}$$
    $$\leq 1,2$$

3.  unité de roulement de roue (10) selon la revendication 1 ou 2,
    **caractérisée en ce que**
    l'ouverture de passage (22) du moyeu de roue (12) comprend une zone de support (22-1) présentant l'engrenage interne (24), une zone de fixation (22-2) présentant un épaulement d'appui (26) ainsi qu'une zone intermédiaire (22-3) disposée entre la zone de support et la zone de fixation (22-1, 22-2) vue dans la direction axiale ($_a$) et **en ce que** par rapport au diamètre de base ($D_F$), la zone intermédiaire (22-3) présente un diamètre de zone intermédiaire (DZ) pour lequel s'applique :

    $$\frac{diam\grave{e}tre\ de\ zone\ interm\acute{e}diaire(D_Z)}{diam\grave{e}tre\ de\ base(D_F)} > 1$$

4.  unité de roulement de roue (10) selon la revendication 2 ou 3,
    **caractérisée en ce que**
    le diamètre de zone intermédiaire ($D_Z$) est supérieur ou égal au diamètre ($D_{Ab}$) de la section exempte de dents (24-3) de l'engrenage interne (24).

5.  unité de roulement de roue (10) selon les revendications 2 et 3,
    **caractérisée en ce que**
    par rapport au diamètre de base ($D_F$), la zone de fixation (22-2) présente un diamètre de zone de fixation ($D_B$) pour lequel s'applique :

$$\frac{\text{diamètre de zone de fixation}(D_B)}{\text{diamètre de base}(D_F)} \geq 1{,}2$$

6. unité de roulement de roue (10) selon la revendication 3,
   **caractérisée en ce que**
   vu dans la direction axiale (a) l'engrenage interne (24) présente une longueur (LI$_n$) et **en ce que** par rapport à la longueur (L$_{In}$) de l'engrenage interne (24), la section intermédiaire (22-3) présente une longueur de section intermédiaire axiale (L$_Z$) pour laquelle s'applique :

$$0{,}5 \leq \frac{\text{longueur de section intermédiaire}(L_Z)}{\text{longueur d'engrenage interne}(L_{In})} \leq 0{,}7$$

7. unité de roulement de roue (10) selon la revendication 3,
   **caractérisée en ce que**
   vu dans la direction axiale (a) l'engrenage interne (24) présente une longueur (L$_{In}$) et **en ce que** par rapport à la longueur (L$_{In}$) de l'engrenage interne (24), la zone de fixation (22-3) présente une longueur de zone de fixation axiale (L$_Z$) pour laquelle s'applique :

$$0{,}3 \leq \frac{\text{longueur de zone de fixation}(L_B)}{\text{longueur d'engrenage interne }(L_{In})} \geq 0{,}6$$

8. unité de roulement de roue (10) selon la revendication 2,
   **caractérisée en ce que**
   la section exempte de dents (24-3) de l'engrenage interne (24) est réalisée sous la forme d'un dégagement.

9. Véhicule, comprenant une unité de roulement de roue,
   **caractérisé en ce que**
   l'unité de roulement de roue selon l'une quelconque des revendications 1 à 8 est réalisée.

Fig. 1
(Stand der Technik)

Fig. 2

Fig. 3

**EP 4 331 861 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004054907 A1
- US 6286909 B1
- JP 2009234542 A